# EUROPÄISCHE PATENTANMELDUNG

(11) **EP 4 201 727 A1**
(43) Veröffentlichungstag der Anmeldung: **28.06.2023**
(21) Anmeldenummer: 22215007.0
(22) Anmeldetag: 20.12.2022
(51) Int. Cl.: B60L 3/04, B60L 53/16, B60L 53/18

(54) **SYSTEM UND LADEEINRICHTUNG ZUM AUFLADEN EINER ANTRIEBSBATTERIE**

(30) Priorität: 22.12.2021 DE 102021134295
(71) Anmelder: BURY Sp. z o.o., 39-300 Mielec (PL)
(72) Erfinder: BURY, Henryk, 32584 Löhne (DE)
(74) Vertreter: Günther, Constantin

(57) **Zusammenfassung**

Die Erfindung betrifft eine Ladeeinrichtung zum Aufladen der Antriebsbatterie eines Elektrofahrzeugs aus einer zum Aufladen der Antriebsbatterie geeigneten Ladeenergiequelle, wobei die Ladeeinrichtung als portable, im Elektrofahrzeug mitführbare Ladeeinrichtung ausgebildet ist und wenigstens einen Fahrzeug-Steckverbinder zum Verbinden mit dem Ladeanschluss des Elektrofahrzeugs und wenigstens einen Energiequellen-Steckanschluss zum Verbinden mit der Ladeenergiequelle hat, wobei die Ladeeinrichtung eine Steuereinheit hat, die zum Steuern des Ladevorgangs und/oder zum Schutz vor Überstrom und/oder Fehlerstrom eingerichtet ist. Die Erfindung betrifft außerdem ein Set aus einer derartigen Ladeeinrichtung und einem oder mehreren Steckverbindungsadaptern. Außerdem betrifft die Erfindung ein System zum Aufladen der Antriebsbatterie eines Elektrofahrzeugs aus einer zum Aufladen der Antriebsbatterie geeigneten Ladeenergiequelle, das eine solche Ladeeinrichtung aufweist.

## Beschreibung

Die Erfindung betrifft ein System zum Aufladen der Antriebsbatterie eines Elektrofahrzeugs aus einer zum Aufladen der Antriebsbatterie geeigneten Ladeenergiequelle, das eine portable, im Elektrofahrzeug mitführbare Ladeeinrichtung aufweist.

Die Erfindung betrifft weiterhin eine Ladeeinrichtung zum Aufladen der Antriebsbatterie eines Elektrofahrzeugs aus einer zum Aufladen der Antriebsbatterie geeigneten Ladeenergiequelle.

Zur Ladung der Antriebsbatterie von Elektrofahrzeugen innerhalb eines privaten Haushalts gibt es verschiedene Möglichkeiten. Zum einen sind Ladekabel verfügbar, die auf der einen Seite einen Stecker für ein- oder mehrphasige Steckdosen besitzen, und auf der anderen Seite einen Stecker, der in die Fahrzeugsteckdose passt. Diese Ladekabel leiten die Energie aus der Hausinfrastruktur direkt in das Fahrzeug. In der Regel besitzen diese Ladekabel noch eine Steuer- und Schutzeinrichtung. Die Steuereinrichtung signalisiert dem Fahrzeug, mit welchem Ladestrom maximal geladen werden darf, um das Kabel und die Hausinfrastruktur nicht zu überlasten, und die Schutzeinrichtung prüft den Fahrzeugstromkreis auf Fehlerströme, die z.B. durch Isolationsfehler hervorgerufen werden können. Weiterhin wird auch auf Überstrom geprüft, um Beschädigungen oder Brände durch fehlerhaft zu hohe Ladeströme auszuschließen. In dem Kabel befindet sich auch eine Trenneinrichtung, die im Falle eines Über- oder eines Fehlerstromes den Stromkreis zum Fahrzeug von der Infrastruktur trennt.

Eine zweite Möglichkeit, das Elektrofahrzeug über die häusliche Infrastruktur zu laden, bietet eine mit der Stromversorgungsinfrastruktur fest verbundene Wallbox. Die Wallbox ist ortsfest installiert und ein- oder dreiphasig mit dem Stromnetz verbunden. Sie besitzt entweder ein mit ihr fest verbundenes Ladekabel, an dessen anderem Ende sich der Stecker für das Fahrzeug befindet, oder sie besitzt eine Steckvorrichtung, in die ein Verbindungskabel zum Fahrzeug eingesteckt wird. Dieses Verbindungskabel ist dann ein Kabel, über das die Energie und die Steuersignale einfach durchgeleitet werden, ohne zusätzliche Steuerungs- und Schutzvorrichtungen. Die Wallbox enthält die Steuereinheit, mit der sie dem Fahrzeug den maximal unterstützten Ladestrom mitteilt. Zusammen mit der Infrastruktur des Hauses bildet die Wallbox die Schutzeinrichtung zum Schutz vor Über- und Fehlerströmen.

Die Wallbox kann auch mit informationstechnischen Netzwerken verbunden sein, um eine Fernsteuerung von Ladeparametern zu ermöglichen. Ebenso können Statusund/oder Ladedaten über das Netzwerk übertragen werden.

Da die Wallbox mit der Energieinfrastruktur ortsfest verbunden ist, können die Ladeparameter von außerhalb beeinflusst werden, um z.B. die vorhandene Leistung an einem bestimmten Ort auf mehrere Wallboxen aufzuteilen, oder um einer Wallbox die Ladung mit höherer Leistung zu ermöglichen, wenn an anderen Ladestationen weniger Leistung benötigt wird. Bei ortsveränderlichen Ladekabeln ist dieses Lademanagement nicht möglich, da nicht bekannt ist, mit welcher Infrastruktur das Ladekabel gerade verbunden ist.

Der Erfindung liegt die Aufgabe zugrunde, ein System zum Aufladen der Antriebsbatterie eines Elektrofahrzeugs anzugeben, das eine gegenüber bekannten Ladekabeln flexibler zu nutzende portable Ladeeinrichtung umfasst.

Diese Aufgabe wird gelöst mit einem System zum Aufladen der Antriebsbatterie eines Elektrofahrzeugs aus einer zum Aufladen der Antriebsbatterie geeigneten Ladeenergiequelle, mit den Merkmalen des Anspruchs 1 und die Ladeeinrichtung mit den Merkmalen des Anspruchs 15. Vorteilhafte Ausführungsformen sind in den Unteransprüchen beschrieben.

Das System weist auf:
a) wenigstens eine Ladeeinrichtung zum Aufladen der Antriebsbatterie eines Elektrofahrzeugs aus der zum Aufladen der Antriebsbatterie geeigneten Ladeenergiequelle, wobei die Ladeeinrichtung als portable, im Elektrofahrzeug mitführbare Ladeeinrichtung ausgebildet ist und wenigstens einen Fahrzeug-Steckverbinder zum Verbinden mit dem Ladeanschluss des Elektrofahrzeugs und wenigstens einen Energiequellen-Steckanschluss zum Verbinden mit der Ladeenergiequelle hat, wobei die Ladeeinrichtung eine Steuereinheit hat, die zum Steuern des Ladevorgangs und/oder zum Schutz vor Überstrom und/oder Fehlerstrom eingerichtet ist,
b) wenigstens einen Wandadapter, der zur Befestigung an einer Wand eingerichtet ist, wobei der Wandadapter einen mit der Ladeenergiequelle verbundenen elektrischen Steckanschluss hat, an den der Energiequellen-Steckanschluss der Ladeeinrichtung ansteckbar ist,
c) wobei die Steuereinheit dazu eingerichtet ist, eine Identifikationskennung und/oder Ortsidentifikation von dem Wandadapter und/oder von der Ladeenergiequelle zu empfangen und in Abhängigkeit hiervon wenigstens einen Ladeparameter des Ladevorgangs einzustellen.

Die Ladeeinrichtung zum Aufladen der Antriebsbatterie eines Elektrofahrzeugs aus der zum Aufladen der Antriebsbatterie geeigneten Ladeenergiequelle ist als portable, im Elektrofahrzeug mitführbare Ladeeinrichtung ausgebildet und hat wenigstens einen Fahrzeug-Steckverbinder zum Verbinden mit dem Ladeanschluss des Elektrofahrzeugs und wenigstens einen Energiequellen-Steckanschluss zum Verbinden mit der Ladeenergiequelle. Die Ladeeinrichtung hat eine Steuereinheit, die zum Steuern des Ladevorgangs und/oder zum Schutz vor Überstrom und/oder Fehlerstrom eingerichtet ist. Die Steuereinheit ist dazu eingerichtet ist, eine Identifikationskennung und/oder Ortsidentifikation von dem Wandadapter und/oder von der Ladeenergiequelle zu empfangen und in Abhängigkeit hiervon wenigstens einen Ladeparameter des Ladevorgangs einzustellen.

Eine solche Ladeeinrichtung, die z.B. als intelligentes Ladekabel oder Teil eines solchen Ladekabels des Elektrofahrzeugs ausgebildet sein kann, erlaubt eine wesentlich größere Flexibilität bei der Durchführung von Ladevorgängen von Elektrofahrzeugen. Die erfindungsgemäße Ladeeinrichtung kann sowohl ortsveränderlich an einer beliebigen üblichen Steckdose betrieben werden als auch ortsfest in einer vordefinierten Infrastruktur-Umgebung. Auf diese Weise können die Vorteile der ortsveränderlichen Mobilität und der ortsfesten Steuerbarkeit miteinander vereint werden. Vorteilhafterweise kann die Ladeeinrichtung als Ladekabel oder Teil eines Ladekabels des Elektrofahrzeugs ausgebildet sein.

Vorteilhafterweise weist das System zudem einen Wandadapter auf, der relativ einfach gestaltet sein kann und nicht die aufwändigen Schaltungsteile benötigt, die zum Beispiel bei einer Wallbox erforderlich sind, damit diese die Steuerung des Ladevorgangs und/oder den Schutz vor Überstrom und/oder Fehlerstrom bereitstellen kann. Dementsprechend kann der Wandadapter relativ kostengünstig bereitgestellt werden. Der Wandadapter ist somit vergleichsweise "unintelligent", die Intelligenz ist stattdessen in die mobile Ladeeinrichtung verlagert. Auf diese Weise kann durch die Ladeeinrichtung eine Art mobile Wallbox bereitgestellt werden, die an unterschiedlichen Ladeenergiequellen und insbesondere auch an unterschiedlichen Wandadaptern genutzt werden kann. Der Wandadapter stellt dabei zumindest einen elektrischen Steckanschluss zur Verfügung, an den der Energiequellen-Steckanschluss der Ladeeinrichtung angesteckt werden kann. Der elektrische Steckanschluss des Wandadapters ist dabei mit der Ladeenergiequelle verbunden, zum Beispiel mit der elektrischen Installation eines Hauses oder irgendeinem anderen Teil eines Energieversorgungsnetzes.

Dabei kann der Wandadapter ohne eine Steuereinheit ausgebildet ist, die zum Steuern des Ladevorgangs und/oder zum Schutz vor Überstrom und/oder Fehlerstrom eingerichtet ist. Eine gewisse elektronisch gesteuerte Eigenfunktionalität kann der Wandadapter dennoch haben, zum Beispiel zum Aussenden oder Weiterleiten der Identifikationskennung und/oder Ortsidentifikation, oder indem er eine eigene Sicherung und/oder ein Anzeigeelement hat.

Durch die Steuereinheit der Ladeeinrichtung kann dann die Identifikationskennung und/oder Ortsidentifikation empfangen werden. Diese kann von dem Wandadapter bereitgestellt werden, zum Beispiel indem dieser einen Speicher hat, in dem die Identifikationskennung und/oder Ortsidentifikation gespeichert ist, oder irgendein anderes geeignetes Identifikationselement hat, zum Beispiel einen Transponder, aus dem die Identifikationskennung und/oder Ortsidentifikation zum Beispiel drahtlos ausgelesen werden kann.

Die Ortsidentifikation kann z.B. eine Information über Längen- und Breitengrad des Orts der Ladeenergiequelle oder eine andere Geoinformation sein. Durch die Identifikationskennung kann die eindeutige Identität der Ladeenergiequelle festgestellt werden, wodurch unter Nutzung zusätzlicher Daten, die in der Ladeeinrichtung oder an entfernter Stelle, z.B. in der Cloud, gespeichert sind, wiederum eine Ortsangabe bezüglich des Orts der Ladeenergiequelle ermittelt werden kann. In jedem Fall kann hierdurch die Ladeeinrichtung die zu seiner korrekten Funktion benötigten Informationen erhalten. Unter Ortsidentifikation ist nicht zwangsläufig eine Ortsangabe zu verstehen, sondern auch beispielsweise lediglich die Zugehörigkeit der Ladeenergiequelle zu einem bestimmten Teil eines Energieversorgungsnetzes, d.h. die Teilnetzzugehörigkeit.

Die Steuereinheit nutzt die empfangene Identifikationskennung und/oder die Ortsidentifikation, um hierdurch wenigstens einen Ladeparameter des Ladevorgangs einzustellen, zum Beispiel die Ladeleistung. Auf diese Weise wird die mobile Ladeeinrichtung mit einer gleichwertigen Funktionalität wie eine Wallbox ausgebildet. Die mobile Ladeeinrichtung unterstützt damit auch bei Anschluss an den Wandadapter ein lokales Energiemanagement.

Die Steuereinheit der Ladeeinrichtung kann z.B. als Schutz- und Steuerbox ausgebildet sein, die in ein Ladekabel integriert ist. Die Steuereinheit kann z.B. eine Mikroprozessor-Steuerung aufweisen. Die Steuereinheit kann über einen Kabelabschnitt mit dem Fahrzeug-Steckverbinder verbunden sein oder direkt ohne dazwischenliegende Kabelverbindung den Fahrzeug-Steckverbinder aufweisen oder in diesen integriert sein. Die Steuereinrichtung kann über einen weiteren Kabelabschnitt mit dem Energiequellen-Steckanschluss verbunden sein oder direkt ohne dazwischenliegende Kabelverbindung mit diesem verbunden sein oder in diesen Energiequellen-Steckanschluss integriert sein. Die Ladeeinrichtung hat somit zu beiden Seiten, d.h. zur Fahrzeug-Seite und zur Energiequellen-Seite, jeweils einen steckbaren elektrischen Verbindungsanschluss in Form eines Steckverbinders.

Gemäß einer vorteilhaften Ausgestaltung der Erfindung ist vorgesehen, dass die Ladeeinrichtung dazu eingerichtet ist, mit ihrem Energiequellen-Steckanschluss direkt oder über einen Steckverbindungsadapter wahlweise an eine öffentliche Ladesäule, eine Wallbox oder eine Haushalts- oder Industriesteckdose angeschlossen zu werden. Dementsprechend kann ein und dieselbe Ladeeinrichtung vom Anwender bei Bedarf entweder den Wandadapter oder an eine öffentliche Ladesäule angeschlossen werden, oder an eine Wallbox, z.B. im privaten oder halböffentlichen Bereich, oder eine Haushaltssteckdose oder eine Industriesteckdose. Dies kann derart realisiert sein, dass der Energiequellen-Steckanschluss universell und/oder veränderbar gestaltet ist, oder der Energiequellen-Steckanschluss mehrere parallel verdrahtete Steckanschlüsse für die jeweiligen Steckernormen der öffentlichen Ladesäule, der Wallbox und der Haushalts- oder Industriesteckdose hat.

Gemäß einer vorteilhaften Ausgestaltung der Erfindung ist vorgesehen, dass das System einen oder mehrere Steckverbindungsadapter aufweist, wobei unterschiedliche Steckverbindungsadapter jeweils einen unterschiedlich ausgebildeten ersten Steckverbinder zum Anschluss an unterschiedliche Steckverbinder-Ausführungen von Ladeenergiequellen und einen identisch ausgebildeten zweiten Steckverbinder zum Energiequellen-Steckanschluss der Ladeeinrichtung haben. Dies hat den Vorteil, dass die Ladeeinrichtung vom Anwender sehr einfach, nämlich durch Auswählen und Anstecken eines passenden Steckverbindungsadapters, je nach Bedarf an die Steckernorm der jeweils gewünschten Ladeenergiequelle angepasst werden kann. Hierfür ist lediglich ein gewisses Sortiment an Steckverbindungsadaptern erforderlich, das der Anwender leicht im Elektrofahrzeug mitführen kann. Auf diese Weise kann die Ladeeinrichtung auch ohne großen Aufwand an länderspezifische Steckernormen angepasst werden. Die Steckverbindungsadapter können so gestaltet sein, dass sie ein durchgehendes Gehäuse haben, an dem sowohl der erste Steckverbinder als auch der zweite Steckverbinder angeordnet ist. Es ist auch möglich, dass der erste Steckverbinder über einen Kabelabschnitt mit dem zweiten Steckverbinder verbunden ist. Als Kabelabschnitt wird dabei ein mehradriges flexibles Kabel mit einer äußeren Isolationsumhüllung verstanden.

In diesem Fall kann der Energiequellen-Steckanschluss der Ladeeinrichtung ein herstellerspezifisches Format haben, dass sich von den Steckernormen der öffentlichen Ladesäule, der Wallbox und der Haushalts- oder Industriesteckdose unterscheidet.

Gemäß einer vorteilhaften Ausgestaltung der Erfindung ist vorgesehen, dass die Steckverbindungsadapter im Bereich des ersten Steckverbinders, der zum Anschluss an die Ladeenergiequelle eingerichtet ist, und/oder zweiten Steckverbinders, der zum Anschluss an den Energiequellen-Steckanschluss der Ladeeinrichtung eingerichtet ist, wenigstens einen Temperatursensor haben, wobei die Ladeeinrichtung dazu eingerichtet ist, anhand einer vom wenigstens einen Temperatursensor erfassten Temperatur wenigstens einen Ladeparameter des Ladevorgangs zu verändern und/oder einen Ladevorgang abzubrechen. Auf diese Weise kann z.B. die Temperatur der Leistungssteckkontakte des Energiequellen-Steckanschlusses und/oder der Leistungssteckkontakte zur Ladeenergiequelle überwacht werden. Dabei können auch mehrere Temperatursensoren vorhanden sein, beispielsweise für jeden Leistungssteckkontakt ein Temperatursensor. Hierdurch können gefährliche Temperaturerhöhungen im Bereich des Energiequellen-Steckanschlusses frühzeitig erkannt werden und daraus resultierende Schäden, z.B. durch einen Brand, vermieden werden.

Gemäß einer vorteilhaften Ausgestaltung der Erfindung ist vorgesehen, dass die Ladeeinrichtung im Bereich des Energiequellen-Steckanschlusses wenigstens einen Temperatursensor hat, wobei die Ladeeinrichtung dazu eingerichtet ist, anhand einer vom wenigstens einen Temperatursensor erfassten Temperatur wenigstens einen Ladeparameter des Ladevorgangs zu verändern und/oder einen Ladevorgang abzubrechen. Auf diese Weise kann z.B. die Temperatur der Leistungssteckkontakte des Energiequellen-Steckanschlusses überwacht werden. Dabei können auch mehrere Temperatursensoren vorhanden sein, beispielsweise für jeden Leistungssteckkontakt ein Temperatursensor. Hierdurch können gefährliche Temperaturerhöhungen im Bereich des Energiequellen-Steckanschlusses frühzeitig erkannt werden und daraus resultierende Schäden, z.B. durch einen Brand, vermieden werden. Temperatursensoren können auch den Leistungskontakten im Bereich des zweiten Steckverbinders oder seines Gegenstücks am Ladekabel zugeordnet sein, um hier ebenfalls gefährliche Temperaturerhöhungen zu detektieren.

Gemäß einer vorteilhaften Ausgestaltung der Erfindung ist vorgesehen, dass die Ladeeinrichtung im Bereich des Energiequellen-Steckanschlusses ein Verriegelungselement aufweist, durch das der Energiequellen-Steckanschluss mit einem daran angesteckten Steckverbinder eines Steckverbindungsadapters verriegelt werden kann, insbesondere mit einem Schloss verriegelt werden kann. Das Verriegelungselement kann z.B. ein abschließbares Verriegelungselement sein oder zur Aufnahme eines abschließbaren Verriegelungselements, z.B. eines Zahlenschlosses, eingerichtet sein. Auf diese Weise kann eine Diebstahlsicherung für die Steckverbindungsadapter bereitgestellt werden.

Gemäß einer vorteilhaften Ausgestaltung der Erfindung ist vorgesehen, dass der Energiequellen-Steckanschluss einen oder mehrere Steckkontakte hat, die zum Übertragen der Steuerdaten von der Ladeenergiequelle, Temperaturdaten von einem Steckverbindungsadapter und/oder Kennungsdaten des angeschlossenen Steckverbindungsadapters zur Steuereinheit eingerichtet sind. Über solche weiteren Stecckontakte, die zusätzlich zu den die elektrische Ladeenergie übertragenden Steckkontakten vorhanden sind, können vorteilhaft weitere Informationen der Steuereinheit bereitgestellt werden. Die Steuerdaten von der Ladeenergiequelle, die z.B. über die CP- und/oder PP-Leitung übertragen werden, können von der Steuereinheit z.B. zur Einstellung eines Ladeparameters des Ladevorgangs genutzt werden. Es kann auch durch die Steuereinheit aufgrund der Temperaturdaten eine Steuerung des Ladevorgangs erfolgen, insbesondere ein Abbruch des Ladevorgangs bei kritischen Temperaturen. Durch die Kennungsdaten des angeschlossenen Steckverbindungsadapters kann der Steuereinheit mitgeteilt werden, welche Art von Steckverbindungsadapter gerade angeschlossen ist. Da verschiedene Steckverbindungsadapter und deren jeweilige erste Steckverbinder für unterschiedliche Maximalströme ausgelegt sein können, kann hierüber der Steuereinheit in kodierter Form der zulässige Maximalstrom für einen Ladevorgang mitgeteilt werden.

Gemäß einer vorteilhaften Ausgestaltung der Erfindung ist vorgesehen, dass die Steuereinheit dazu eingerichtet ist, Steuerdaten von der Ladeenergiequelle direkt und/oder über den Wandadapter zu empfangen und in Abhängigkeit der Steuerdaten wenigstens einen Ladeparameter des Ladevorgangs einzustellen. Auf diese Weise kann die mobile Ladeeinrichtung in ein lokales Energiemanagement eingebunden werden, ähnlich wie bei einer Wallbox.

Gemäß einer vorteilhaften Ausgestaltung der Erfindung ist vorgesehen, dass die Ladeeinrichtung eine Kommunikationsvorrichtung hat, durch die eine Datenkommunikationsverbindung zu einem weiteren Informations- oder Steuergerät herstellbar ist, das nicht Teil der Ladeeinrichtung ist. Auf diese Weise ist die Ladeeinrichtung zumindest lokal vernetzt. Die Kommunikationsvorrichtung kann z.B. eine Datenkommunikationsverbindung über einen Funkstandard wie Bluetooth, WLAN, NFC oder einen Mobilfunkstandard bereitstellen. Es ist auch eine drahtgebundene Kommunikationsverbindung möglich, wie z.B. über das Ethernet oder eine Powerline-Kommunikation über eine Stromversorgungsleitung. Durch diese Datenkommunikationsverbindung kann die Ladeeinrichtung mit einem lokalen oder übergeordneten Steuerungsserver verbunden sein, der die vorhandene elektrische Energie auf die einzelnen Ladeenergiequellen, z.B. einzelne Ladestationen oder Ladeparks, aufteilt. Auf diese Weise kann der Steuereinheit der Ladeeinrichtung die jeweils zugeteilte elektrische Leistung der Ladeenergiequelle mitgeteilt werden.

Gemäß einer vorteilhaften Ausgestaltung der Erfindung ist vorgesehen, dass die Kommunikationsvorrichtung als Drahtlos-Kommunikationsvorrichtung ausgebildet ist, die zur drahtlosen Datenkommunikation mit dem weiteren Informations- oder Steuergerät eingerichtet ist. Dies hat den Vorteil, dass die Ladevorrichtung die Datenkommunikationsverbindung auch an unterschiedlichen Orten automatisch aufbauen kann, wenn entsprechende Kommunikationspartner in der Nähe identifiziert werden können. Der Anwender muss dabei nicht erst eine zusätzliche Leitung anschließen.

Gemäß einer vorteilhaften Ausgestaltung der Erfindung ist vorgesehen, dass vom Anwender eine Identifikationskennung der Ladeenergiequelle in einer Speichervorrichtung der Ladevorrichtung, insbesondere in dessen Steuereinheit, oder in einer externen Speichervorrichtung mit einer Ortsidentifikation der Ladeenergiequelle verknüpft werden kann. Die Speichervorrichtung kann z.B. ein Speicher der Steuereinheit der Ladevorrichtung sein, oder im Falle einer externen Speichervorrichtung ein Server in einer Cloud. Jedenfalls unterstützt die Ladeeinrichtung die Einstellmöglichkeit für den Anwender, die Identifikationskennung der Ladeenergiequelle mit einer Ortsidentifikation der Ladeenergiequelle zu verknüpfen. Auf diese Weise kann die einmal vom Anwender entsprechend eingestellte Ladeeinrichtung anhand der Identifikationskennung der Ladeenergiequelle jeweils automatisch die Ortsidentifikation der Ladeenergiequelle, d.h. die Geoposition oder die Teilnetzzugehörigkeit, ermitteln und dementsprechend automatisch eine Zuordnung zu den zu erwartenden Ladeparametern und/oder Abrechnungsmodalitäten herstellen.

Gemäß einer vorteilhaften Ausgestaltung der Erfindung ist vorgesehen, dass zumindest bei bestimmten Steckverbindungsadaptern der erste und/oder zweite Steckverbinder einen oder mehrere Steckkontakte hat, die zum Übertragen der Steuerdaten, der Identifikationskennung und/oder der Ortsidentifikation von dem Wandadapter und/oder von der Ladeenergiequelle zur Steuereinheit eingerichtet sind. Dies hat den Vorteil, dass auch der Steckverbindungsadapter durch solche zusätzlichen Steckkontakte zur Weiterleitung von Steuerdaten von der Ladeenergiequelle zur Steuereinheit eingerichtet ist. Bei Steckverbindungsadaptern, die zum Beispiel zum Anschluss an eine Haushaltssteckdose eingerichtet sind, kann der erste Steckverbinder ohne solche zusätzlichen Steckkontakte zum Übertragen von Steuerdaten ausgebildet sein, da eine Haushaltssteckdose die Steuerdaten nicht bereitstellt. Ein Steckverbindungsadapter, der zum Anschluss an eine Wallbox eingerichtet ist, kann dagegen mit solchen zusätzlichen Steckkontakten zum Übertragen der Steuerdaten ausgebildet sein.

Gemäß einer vorteilhaften Ausgestaltung der Erfindung ist vorgesehen, dass der Wandadapter eine Halterung zum Halten der Ladeeinrichtung hat. Die Halterung hat den zusätzlichen Vorteil, dass die Ladeeinrichtung oder zumindest ein Teil der Ladeeinrichtung, z.B. die Steuereinheit, in gewünschter Weise an der Wand bzw. am Wandadapter fixiert werden kann. Die Halterung kann als passive Halterung ausgebildet sein, d.h. als ein rein mechanisches Bauteil ohne elektrische Funktionalität, oder kann eine elektrisch betätigbare Verriegelung und/oder Entriegelung haben, mit der der an der Halterung fixierte Teil der Ladeeinrichtung mechanisch verriegelt werden kann bzw. die Verriegelung bei Bedarf wieder aufgehoben werden kann.

Gemäß einer vorteilhaften Ausgestaltung der Erfindung ist vorgesehen, dass das System ein Schloss hat, durch das die Ladeeinrichtung, insbesondere dessen Steuereinheit, an der Halterung abschließbar befestigbar ist. Auf diese Weise kann auch eine Diebstahlsicherung der Ladevorrichtung realisiert werden. Das Schloss kann beispielsweise mittels eines Schlüssels mechanisch betätigt werden. Das Schloss kann auch als Zahlenschloss ausgebildet sein. In einer weiteren Ausführungsform kann das Schloss als automatisch entriegelbares Schloss ausgebildet sein, das beispielsweise aufgrund eines elektrischen Signals entriegelbar ist.

In einer Ausführungsform der Ladevorrichtung ist diese als Ladekabel ausgebildet, aufweisend eine Schutz- und Steuerbox, in der die entsprechenden Vorrichtungen zum Schutz und zur Steuerung integriert sind, dem damit verbundenen Anschlusskabel zum Fahrzeug, das auf der Fahrzeugseite den Fahrzeugstecker besitzt, und dem mit der Schutz- und Steuerbox verbundenem Anschlusskabel zur Stromnetzinfrastruktur. Damit das Ladekabel an verschiedenen ein- und dreiphasigen Steckdosen angeschlossen werden kann, besitzt es eine zusätzliche Steckvorrichtung innerhalb des Anschlusskabels zur Stromnetzinfrastruktur, an der verschiedene Steckverbindungsadapter für verschiedene Steckdosennormen angeschlossen werden können. Diese zusätzliche Steckvorrichtung, z.B. der Energiequellen-Steckanschluss und der zugeordnete zweite Steckverbinder des Steckverbindungsadapters, beinhaltet z. B. Kontakte für die stromführenden Leiter (L1, L2, L3, N) und den Schutzleiter (PE), die konstruktiv für den maximal zulässigen Strom ausgelegt sind, z.B. 32A. Weiterhin beinhaltet diese Steckvorrichtung weitere Kontakte für Steuersignale, beispielsweise um die beiden Signale CP (Control Pilot) und PP (Proximity) einer öffentlichen Ladestation zur Steuerbox des Ladekabels zu führen. Über weitere Kontakte können beispielsweise Informationen des angesteckten Steckverbindungsadapters geführt werden. Da verschiedene Steckvorrichtungen der Steckverbindungsadapter für unterschiedliche Maximalströme ausgelegt sein können, kann hierüber in codierter Form der zulässige Maximalstrom übertragen werden.

Eine weitere wichtige Zustandsgröße ist die Temperatur in den Steckverbindungen, sowohl die Temperatur in dem Stecker zur Netzinfrastruktur als auch die Temperatur in der Adaptersteckverbindung. Insbesondere ist es von Vorteil, wenn die Temperatur der Leistungssteckkontakte über einen oder mehrere Temperatursensoren erfasst wird. Bei Kontaktverbindungen mit einem höheren Übergangswiderstand, wie er z.B. durch Verschmutzung oder Korrosion entsteht, und der dadurch erzeugten erhöhten Verlustleistung kann es zu kritischen Temperaturerhöhungen kommen, die auch einen Brand verursachen können. Um diese Fehler frühzeitig zu erkennen, wird die Temperatur während des Ladevorgangs laufend gemessen und über einen oder mehrere Steuerkontakte übertragen. Die Elektronik in der Steuerbox kann auf Temperaturerhöhungen entsprechend reagieren, z.B. indem der Ladestrom verringert wird, oder indem die Ladung abgeschaltet und ein Übertemperaturfehler signalisiert wird.

Zu erwähnen sei hier noch, dass die Informationen über die angeschlossene Steckernorm und die Temperaturen nicht zwangsläufig über Steckkontakte übertragen werden müssen. Auch eine Übertragung über einen Funkstandard ist möglich. Beispielsweise können die Informationen über den NFC- oder RFID-Funkstandard übertragen werden. Der angeschlossene Steckverbindungsadapter besitzt in diesem Fall eine Empfangsantenne und wirkt wie ein passiver RFID-Tag. Die Energie, die zur Messung der Temperatur benötigt wird, wird ebenfalls kabellos übertragen.

Es wird vorgeschlagen, eine weitere Information über den angeschlossenen Steckverbindungsadapter zu übertragen. Die Adaptersteckverbindung, die sich am Kabel, das zur Steuerbox führt, befindet, kann in die unterschiedlichen Steckverbindungsadapter für die verschiedenen Steckdosennormen gesteckt werden, oder in die Steckeraufnahme eines ortsfest installierten Wandadapters. Der Wandadapter ist einoder dreiphasig fest mit dem Stromnetz verbunden und leitet den Strom lediglich auf die Steckvorrichtung durch. Weiterhin kann im Wandadapter eingestellt werden, welcher maximale Ladestrom von der angeschlossenen Infrastruktur unterstützt wird. Wird das Ladekabel an den Wandadapter angesteckt, so wird zumindest eine Information drahtgebunden oder drahtlos übertragen, aus der das Ladekabel eine eindeutige Ortsinformation generieren kann. Die Information kann z.B. der Längen- und Breitengrad oder ein anderes Geosystem sein, oder es kann eine eindeutige Identität sein, unter der im Ladekabel oder in der Cloud eine Ortsangabe hinterlegt ist, aus der das Ladekabel die zu seiner korrekten Funktion benötigte Information erhält.

Vorteilhaft ist weiterhin, wenn das Ladekabel zumindest lokal vernetzt ist. Die Vernetzung kann beispielsweise über einen Funkstandard, wie Bluetooth, WLAN, NFC, einen Mobilfunkstandard, oder auch drahtgebunden, wie z.B. Ethernet oder über das Stromnetz die Powerline-Kommunikation geschehen. Hierüber kann das Ladekabel mit einem lokalen oder übergeordneten Steuerungs-Server verbunden sein, der die vorhandene Energie auf die einzelnen Ladestationen aufteilt.

Durch diese vorteilhafte Ausführung des Ladekabels kann es zum einen mobil eingesetzt werden und mit der maximalen Ladeleistung ein Elektrofahrzeug laden, wobei eine Limitierung der Ladeleistung durch den verwendeten Steckverbindungsadapter oder durch einen Übertemperaturschutz geschieht. Zum anderen kann das Ladekabel aber auch ortsfest an einem Wandadapter benutzt werden, wobei es dann das lokale Energiemanagement unterstützt. Teilweise werden Ladegeräte, die lokal steuerbar sind, durch staatliche Zuschüsse unterstützt, um ein ausgeweitetes Energiemanagement zu erreichen. Für diesen Fall besteht auch bei dem Ladekabel dieser Art eine Zuschussberechtigung, da es lokal ebenfalls in einem Energiemanagementsystem eingesetzt werden kann.

Wird das Ladekabel im öffentlichen oder halböffentlichen Raum benutzt, besteht grundsätzlich die Gefahr eines Diebstahls. Typischerweise wird das Fahrzeug an einer öffentlichen Ladestation abgestellt, das Ladekabel aus dem Fahrzeug herausgeholt, der Typ-2-Adapter für die Steckverbindung der öffentlichen Ladestation angesteckt und das Ladekabel sowohl mit der öffentlichen Ladestation als auch mit dem Fahrzeug verbunden. Der Ladevorgang wird nun gestartet. Mit Verriegelung des Fahrzeugs wird auch der Ladestecker am Fahrzeug verriegelt, womit das Ladekabel inklusive der Steuerbox gegen Diebstahl geschützt ist. Nachdem der Ladevorgang gestartet wurde, wird automatisch auch der Stecker in der öffentlichen Ladeeinrichtung verriegelt. Die Steckverbindung, die nicht verriegelt ist, ist die Adapterverbindung innerhalb des Kabels zum Anschluss an die Energieversorgung. Während der Abwesenheit des Fahrzeugbesitzers ist es möglich, während des Ladevorgangs diese Verbindung zu lösen, wodurch der Ladevorgang unterbrochen wird. Dadurch wird auch die Verriegelung des Steckers in der Ladevorrichtung gelöst und der Adapter ist frei zugänglich und kann entwendet werden. Das Ladekabel ist weiterhin durch die Verriegelung am Fahrzeug geschützt, bis der Fahrzeugbesitzer das Fahrzeug aufschließt. Die Gefahr in diesem Szenario ist, dass die Adapter möglicherweise sehr begehrt sind und leicht entwendet werden können. Zur Lösung dieses Problems wird vorgeschlagen, an den beiden Gegenstecker-Verbindungsgehäusen der Adaptersteckverbindung, z.B. am Energiequellen-Steckanschluss und an dem zugeordneten zweiten Steckverbinder des Steckverbindungsadapters, jeweils eine z.B. runde oder eckige Aussparung vorzusehen, durch die der Bügel eines Bügelschlosses gezogen und das Schloss dann verriegelt wird. Damit ist dann die Adaptersteckverbindung sowohl vor dem Lösen des elektrischen Kontaktes als auch dem Trennen des mechanischen Kontaktes geschützt.

Es wird vorgeschlagen, die Steckverbindung am Wandadapter ebenso mit dieser Aussparung zu versehen, damit das Ladekabel am Wandadapter ebenfalls verriegelt werden kann. Somit ist das Ladekabel insgesamt vor Diebstahl geschützt, auch wenn sich der Wandadapter im öffentlichen oder halböffentlichen Raum befindet, z.B. in der gemeinsamen Tiefgarage eines Mehrparteien-Wohnhauses. Alternativ kann auch der Wandadapter eine Halterung für die Steuerbox des Ladekabels besitzen, die über ein Schloss verriegelbar ist. In diesem Fall ist das Ladekabel ebenfalls vor Diebstahl geschützt.

Die Erfindung wird nachfolgend anhand von Ausführungsbeispielen unter Verwendung von Zeichnungen näher erläutert. Es zeigen:
- Figur 1: eine Ladevorrichtung sowie mehrere Steckverbindungsadapter,
- Figur 2: eine Ladevorrichtung und einen Wandadapter,
- Figur 3: eine Ladevorrichtung und einen Wandadapter mit Halterung,
- Figur 4: einen Energiequellen-Steckanschluss sowie einen zweiten Steckverbinder eines Steckverbindungsadapters.

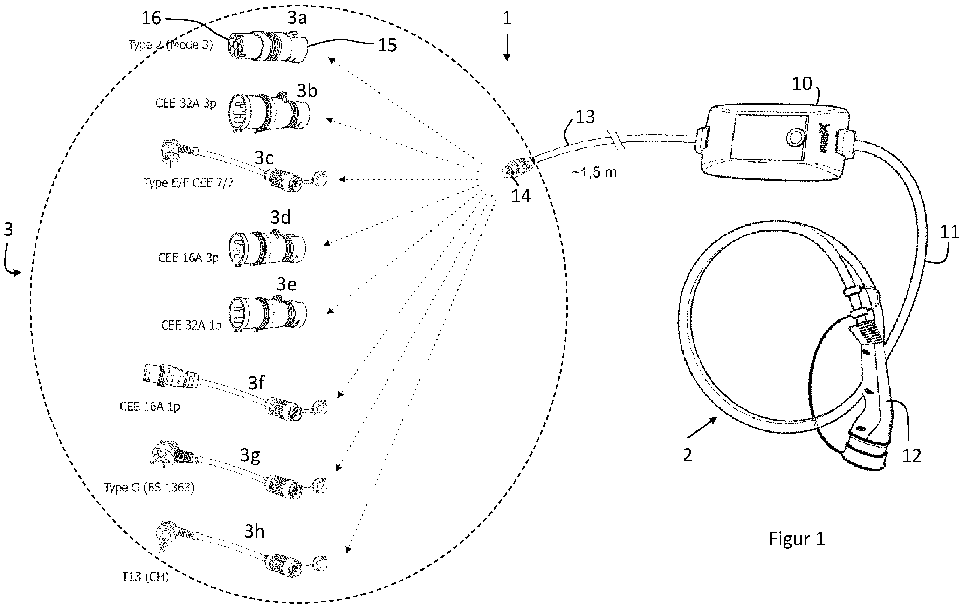

Die Figur 1 zeigt ein Set 1 aus einer Ladevorrichtung 2 in Form eines Ladekabels und einer Anzahl von verschiedenen Steckverbindungsadaptern 3. Das Ladekabel besitzt eine Steuereinheit 10, z.B. eine Schutz- und Steuerbox, die mit einem Kabel 11 verbunden ist, an dessen Ende sich der Fahrzeug-Steckverbinder 12 zum Verbinden mit dem Ladeanschluss des Elektrofahrzeugs befindet. Dieser Fahrzeug-Steckverbinder 12 ist eingerichtet, formschlüssig in die Ladebuchse eines Elektrofahrzeugs eingesteckt zu werden. Die Steuereinheit 10 ist weiterhin mit einem zweiten Kabel 13 verbunden, an dessen Ende sich ein anderer Stecker in Form eines Energiequellen-Steckanschlusses 14 befindet. Dieser Stecker ist nicht mit einer üblichen Steckverbindung aus Haushalt oder Industrie kompatibel, sondern lässt sich nur mit speziell für dieses Set gefertigten Steckverbindungsadaptern verbinden.

Jeder Steckverbindungsadapter besitzt auf der einen Seite einen zweiten Steckverbinder 15, z.B. eine Kupplung, der dafür eingerichtet ist, mit dem Energiequellen-Steckanschluss 14 verbunden zu werden. Auf der anderen Seite des Steckverbindungsadapters befindet sich dann ein erster Steckverbinder 16 zum Anschluss an die Ladeenergiequelle, z.B. für die üblichen Steckvorrichtungen in Haushalt und Industrie. Beispielsweise besitzt jeder dieser Steckverbindungsadapter Steckkontakte für ein bis drei Phasen, den Nullleiter und den Schutzleiter. Eine Ausnahme bildet der Steckverbindungsadapter 3a, der neben den drei Phasen, dem Nullleiter und dem Schutzleiter noch zwei Steuerkontakte besitzt. Dieser Steckverbindungsadapter ist dafür ausgelegt, in eine öffentliche Wechselstromladeeinrichtung oder in eine Wallbox ohne Ladekabel eingesteckt zu werden. Hierbei dienen die beiden Steuerkontakte der Ladesteuerung und Signalisierung des maximal verfügbaren Ladestroms, den die Ladeenergiequelle bereitstellen kann und der über die Ladevorrichtung 2 übertragen werden kann.

Wie aus der Figur 1 ersichtlich ist, gibt es Steckverbindungsadapter 3a, 3b, 3d, 3e, bei denen der erste und der zweite Steckverbinder 16, 15 in einem Gehäuse untergebracht sind, und es gibt Steckverbindungsadapter 3c, 3f, 3g, 3h, bei denen sich ein kurzes Kabel zwischen den beiden Steckverbindern 15, 16 befindet.

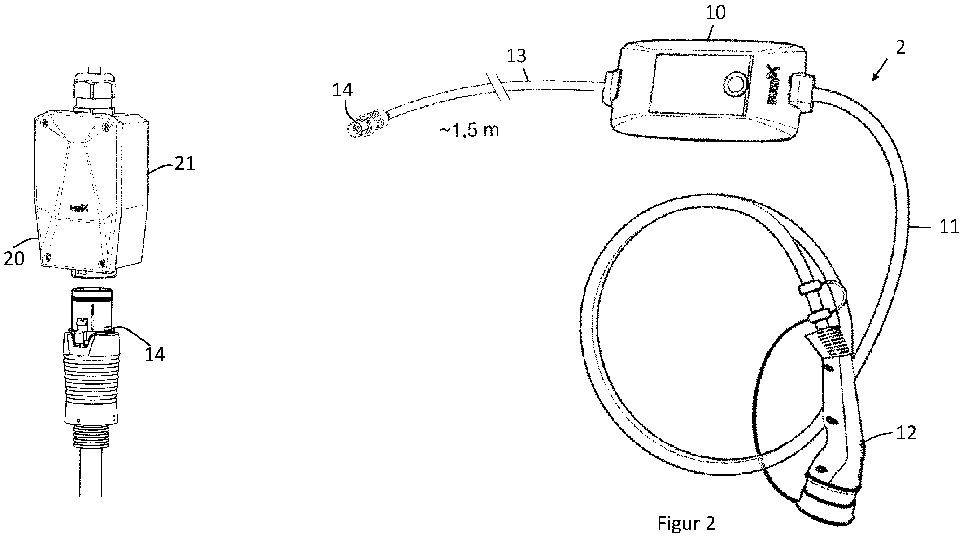

In Figur 2 ist die Ladevorrichtung 2 mit einem Wandadapter 21 zu sehen. Der Wandadapter 21 ist fest in die Hausinstallation des Stromnetzes integriert. Wenn der Energiequellen-Steckanschluss 14 in den Steckanschluss 20 des Wandadapters 21 eingesteckt wird, erkennt die Steuereinheit 10 der Ladevorrichtung 2 nach der Identifikation des Steckanschlusses 20, dass es sich an einer ortsfesten Installation befindet. Somit gibt die Steuereinheit 10 alle Features frei, die an diesem Ort möglich sind.

Die Information über die an diesem Ort zur Verfügung stehenden Features können auf mehrere Arten übertragen werden:
1. Es ist möglich, dass die Kenndaten wie maximaler Ladestrom in dem Wandadapter in einem Speicher hinterlegt werden, bzw. dass sie über einen Codierschalter bei der Installation eingestellt werden. Im eingesteckten Zustand werden sie direkt übertragen, damit die Ladevorrichtung 2 diese Features freigibt.
2. Es ist möglich, dass der Wandadapter eine eindeutige Kennung besitzt und diese im eingesteckten Zustand an die Ladevorrichtung 2 überträgt. Beim erstmaligen Verbinden der Ladevorrichtung 2 mit diesem Wandadapter muss der Anwender in der Ladevorrichtung 2 eine Ortszuordnung angeben. In einem Speicher in der Ladevorrichtung 2 sind danach die Kennung des Wandadapters und die Ortszuordnung miteinander verbunden abgespeichert.
3. Das Verfahren ist das gleiche wie unter Punkt 2, jedoch wird die Zuordnung von Kennung und Ort in der Cloud abgespeichert. Damit ist in der Ladevorrichtung 2 kein Speicher mehr notwendig, er kann aber zusätzlich noch vorhanden sein, falls beim Einstecken die Verbindung mit der Cloud nicht bestehen sollte.

Andere Ladevorrichtungen 2 können ebenfalls auf die Informationen in der Cloud zugreifen. In diesem Fall kann eine zweite Ladevorrichtung 2, die in einen Wandadapter, dessen Kennung bereits mit der Ortsangabe verknüpft wurde, eingesteckt wird, direkt ohne weitere Eingaben auf die Daten in der Cloud zurückgreifen.

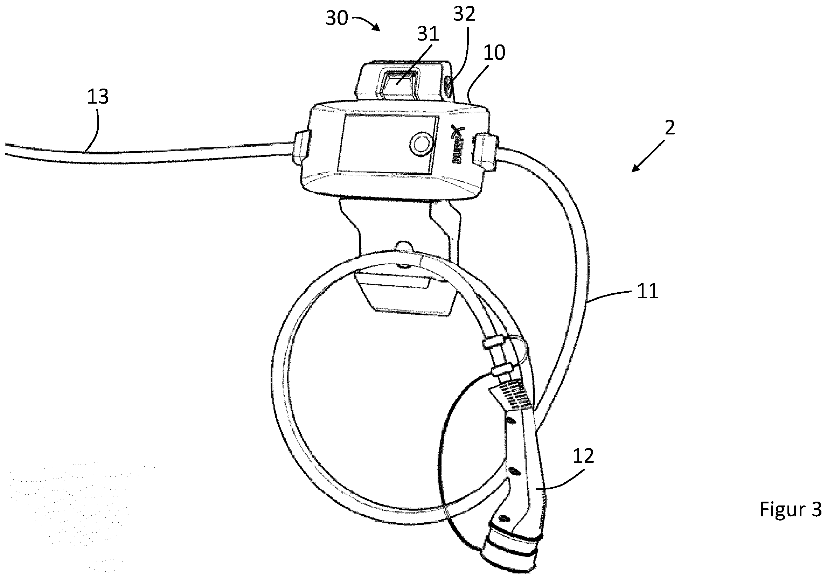

Figur 3 zeigt einen Wandadapter 21 mit einer Halterung 30 zur Aufnahme und Verriegelung der Steuereinheit 10 der Ladevorrichtung 2. Über ein Schloss 32, zum Beispiel ein mit einem Schlüssel betätigtes Schloss oder ein Zahlenschloss, kann die Steuereinheit 10 und damit die gesamte Ladevorrichtung gegen Diebstahl geschützt werden, was für eine Installation im öffentlichen oder halböffentlichen Raum ein großer Vorteil ist. Die Halterung 30 besitzt eine Verriegelung, die einrastet, wenn die Steuereinheit 10 in einen Aufnahmebereich der Halterung 30 eingelegt wird. Durch die Verriegelung ist die Steuereinheit 10 gegen Herausfallen oder Herausziehen geschützt. Lösen lässt sie sich durch einen Taster 31, der bei Hereindrücken den Verriegelungsvorsprung zurückfährt und die Steuereinheit 10 zum Herausnehmen freigibt. Über das Schloss 32 kann das Hereindrücken des Tasters 31 im abgeschlossenen Zustand verhindert werden, womit das System gegen Diebstahl geschützt ist.

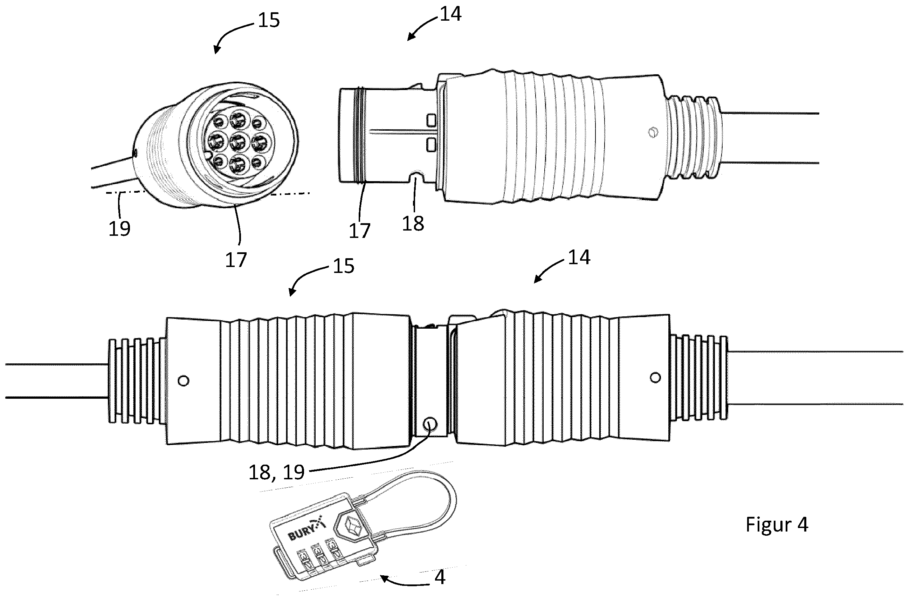

Figur 4 zeigt das Prinzip des Schutzes der Adaptersteckverbindung gegen unbefugtes Unterbrechen, bzw. gegen Diebstahl, z.B. durch eine abschließbare Verbindung des Energiequellen-Steckanschlusses 14 und des zugeordneten zweiten Steckverbinders 15 des Steckverbindungsadapters. Jeder der beiden Steckverbindungsteile besitzt um die elektrischen Kontakte eine hohlzylinderförmige Schutzwand 17. Die Durchmesser der jeweiligen Schutzwände 17 sind so aufeinander abgestimmt, dass im eingesteckten Zustand die Schutzwand des einen Steckverbindungsteils die Schutzwand des anderen Steckverbindungsteils umgibt, so dass das eine Steckverbindungsteil eine äußere Schutzwand und das andere eine innere Schutzwand besitzt. Die innere Schutzwand besitzt eine tangentiale Bohrung 18, wobei die Bohrung 18 sich vollständig oder nicht vollständig in der Schutzwand befinden kann, zum Beispiel zu etwa 60% bis 80%. Die äußere Schutzwand besitzt ebenfalls eine Bohrung 19 in tangentialer Richtung, wobei sich im zusammengesteckten Zustand der beiden Steckverbindungsteile eine einzige Bohrung ergibt, d. h. die Bohrungen fluchten miteinander. Durch diese Bohrung 18, 19 kann der gerade Teil des Bügels eines Bügelschlosses gesteckt und das Schloss durch Einrasten verriegelt werden. In Figur 4 ist kein Bügelschloss, sondern ein Schloss 4 mit einem Drahtseil zu sehen. Das Drahtseil wird durch das Loch, das durch die Bohrungen 18, 19 der beiden Adapterteile gebildet wird, gezogen und das Ende in das Schloss eingerastet. Damit sind die Steckverbindungsteile mechanisch miteinander verbunden und können ohne Entfernen des Schlosses 4, d. h. durch Herausziehen des Drahtseils, nicht gelöst werden.

## Patentansprüche

1. System zum Aufladen der Antriebsbatterie eines Elektrofahrzeugs aus einer zum Aufladen der Antriebsbatterie geeigneten Ladeenergiequelle, aufweisend:
a) wenigstens eine Ladeeinrichtung zum Aufladen der Antriebsbatterie eines Elektrofahrzeugs aus der zum Aufladen der Antriebsbatterie geeigneten Ladeenergiequelle, wobei die Ladeeinrichtung als portable, im Elektrofahrzeug mitführbare Ladeeinrichtung ausgebildet ist und wenigstens einen Fahrzeug-Steckverbinder (12) zum Verbinden mit dem Ladeanschluss des Elektrofahrzeugs und wenigstens einen Energiequellen-Steckanschluss (14) zum Verbinden mit der Ladeenergiequelle hat, wobei die Ladeeinrichtung eine Steuereinheit (10) hat, die zum Steuern des Ladevorgangs und/oder zum Schutz vor Überstrom und/oder Fehlerstrom eingerichtet ist,
b) wenigstens einen Wandadapter (21), der zur Befestigung an einer Wand eingerichtet ist, wobei der Wandadapter einen mit der Ladeenergiequelle verbundenen elektrischen Steckanschluss (20) hat, an den der Energiequellen-Steckanschluss der Ladeeinrichtung ansteckbar ist,
c) wobei die Steuereinheit (10) dazu eingerichtet ist, eine Identifikationskennung und/oder Ortsidentifikation von dem Wandadapter und/oder von der Ladeenergiequelle zu empfangen und in Abhängigkeit hiervon wenigstens einen Ladeparameter des Ladevorgangs einzustellen.

2. System nach Anspruch 1, **dadurch gekennzeichnet, dass** die Ladeeinrichtung dazu eingerichtet ist, mit ihrem Energiequellen-Steckanschluss (14) direkt oder über einen Steckverbindungsadapter wahlweise an eine öffentliche Ladesäule, eine Wallbox oder eine Haushalts- oder Industriesteckdose angeschlossen zu werden.

3. System nach einem der vorhergehenden Ansprüche, **dadurch gekennzeichnet, dass** das System einen oder mehrere Steckverbindungsadapter (3, 3a, 3b, 3c, 3d, 3e, 3f, 3g, 3h) aufweist, wobei unterschiedliche Steckverbindungsadapter (3, 3a, 3b, 3c, 3d, 3e, 3f, 3g, 3h) jeweils einen unterschiedlich ausgebildeten ersten Steckverbinder (16) zum Anschluss an unterschiedliche Steckverbinder-Ausführungen von Ladeenergiequellen und einen identisch ausgebildeten zweiten Steckverbinder (15) zum Energiequellen-Steckanschluss (14) der Ladeeinrichtung haben.

4. System nach Anspruch 3, **dadurch gekennzeichnet, dass** die Steckverbindungsadapter (3, 3a, 3b, 3c, 3d, 3e, 3f, 3g, 3h) im Bereich des ersten Steckverbinders (16), der zum Anschluss an die Ladeenergiequelle eingerichtet ist, und/oder zweiten Steckverbinders (15), der zum Anschluss an den Energiequellen-Steckanschluss (14) der Ladeeinrichtung eingerichtet ist, wenigstens einen Temperatursensor haben, wobei die Ladeeinrichtung dazu eingerichtet ist, anhand einer vom wenigstens einen Temperatursensor erfassten Temperatur wenigstens einen Ladeparameter des Ladevorgangs zu verändern und/oder einen Ladevorgang abzubrechen.

5. System nach einem der vorhergehenden Ansprüche, **dadurch gekennzeichnet, dass** die Ladeeinrichtung im Bereich des Energiequellen-Steckanschlusses (14) wenigstens einen Temperatursensor hat, wobei die Ladeeinrichtung dazu eingerichtet ist, anhand einer vom wenigstens einen Temperatursensor erfassten Temperatur wenigstens einen Ladeparameter des Ladevorgangs zu verändern und/oder einen Ladevorgang abzubrechen.

6. System nach einem der vorhergehenden Ansprüche, **dadurch gekennzeichnet, dass** die Ladeeinrichtung im Bereich des Energiequellen-Steckanschlusses (14) ein Verriegelungselement aufweist, durch das der Energiequellen-Steckanschluss (14) mit einem daran angesteckten Steckverbinder eines Steckverbindungsadapters (3, 3a, 3b, 3c, 3d, 3e, 3f, 3g, 3h) verriegelt werden kann, insbesondere mit einem Schloss verriegelt werden kann.

7. System nach einem der vorhergehenden Ansprüche, **dadurch gekennzeichnet, dass** der Energiequellen-Steckanschluss (14) einen oder mehrere Steckkontakte hat, die zum Übertragen der Steuerdaten von der Ladeenergiequelle, Temperaturdaten von einem Steckverbindungsadapter (3, 3a, 3b, 3c, 3d, 3e, 3f, 3g, 3h) und/oder Kennungsdaten des angeschlossenen Steckverbindungsadapters (3, 3a, 3b, 3c, 3d, 3e, 3f, 3g, 3h) zur Steuereinheit (10) eingerichtet sind.

8. System nach einem der vorhergehenden Ansprüche, **dadurch gekennzeichnet, dass** die Steuereinheit (10) dazu eingerichtet ist, Steuerdaten von der Ladeenergiequelle direkt und/oder über den Wandadapter (21) zu empfangen und in Abhängigkeit der Steuerdaten wenigstens einen Ladeparameter des Ladevorgangs einzustellen.

9. System nach einem der vorhergehenden Ansprüche, **dadurch gekennzeichnet, dass** die Ladeeinrichtung eine Kommunikationsvorrichtung hat, durch die eine Datenkommunikationsverbindung zu einem weiteren Informations- oder Steuergerät herstellbar ist, das nicht Teil der Ladeeinrichtung ist.

10. System nach Anspruch 9, **dadurch gekennzeichnet, dass** die Kommunikationsvorrichtung als Drahtlos-Kommunikationsvorrichtung ausgebildet ist, die zur drahtlosen Datenkommunikation mit dem weiteren Informations- oder Steuergerät eingerichtet ist.

11. System nach einem der vorhergehenden Ansprüche, **dadurch gekennzeichnet, dass** vom Anwender eine Identifikationskennung der Ladeenergiequelle in einer Speichervorrichtung der Ladevorrichtung (2), insbesondere in dessen Steuereinheit (10), oder in einer externen Speichervorrichtung mit einer Ortsidentifikation der Ladeenergiequelle und/oder des Wandadapters (21) verknüpft werden kann.

12. System nach einem der vorhergehenden Ansprüche, **dadurch gekennzeichnet, dass** die Ladeeinrichtung als Ladekabel oder Teil eines Ladekabels des Elektrofahrzeugs ausgebildet ist.

13. System nach einem der vorhergehenden Ansprüche, **dadurch gekennzeichnet, dass** der Wandadapter (21) eine Halterung (30) zum Halten der Ladeeinrichtung hat.

14. System nach Anspruch 13, **dadurch gekennzeichnet, dass** das System ein Schloss (4, 32) hat, durch das die Ladeeinrichtung, insbesondere dessen Steuereinheit (10), an der Halterung (30) des Wandadapters (21) abschließbar befestigbar ist.

15. Ladeeinrichtung zum Aufladen der Antriebsbatterie eines Elektrofahrzeugs aus einer zum Aufladen der Antriebsbatterie geeigneten Ladeenergiequelle, wobei die Ladeeinrichtung als portable, im Elektrofahrzeug mitführbare Ladeeinrichtung ausgebildet ist und wenigstens einen Fahrzeug-Steckverbinder (12) zum Verbinden mit dem Ladeanschluss des Elektrofahrzeugs und wenigstens einen Energiequellen-Steckanschluss (14) zum Verbinden mit der Ladeenergiequelle hat, wobei die Ladeeinrichtung eine Steuereinheit (10) hat, die zum Steuern des Ladevorgangs und/oder zum Schutz vor Überstrom und/oder Fehlerstrom eingerichtet ist, **dadurch gekennzeichnet, dass** die Steuereinheit (10) dazu eingerichtet ist, eine Identifikationskennung und/oder Ortsidentifikation von dem Wandadapter und/oder von der Ladeenergiequelle zu empfangen und in Abhängigkeit hiervon wenigstens einen Ladeparameter des Ladevorgangs einzustellen.
